# EUROPÄISCHE PATENTSCHRIFT

(11) **EP 0 461 569 B1**
(45) Veröffentlichungstag und Bekanntmachung des Hinweises auf die Patenterteilung: **30.11.1994**
(21) Anmeldenummer: 91109423.3
(22) Anmeldetag: 08.06.1991
(51) Int. Cl.: D01H 9/18, B65G 47/26

(54) **Transporteinrichtung für voneinander unabhängige Paletten, die Spulen oder Spulenhülsen tragen**
Transport device for independent pallets carrying bobbins or cores
Dispositif de transport de supports individuels portant des bobines ou des tubes vides

(30) Priorität: 15.06.1990 DE 4019100
(43) Veröffentlichungstag der Anmeldung: 18.12.1991
(73) Patentinhaber: W. SCHLAFHORST AG & CO., D-41061 Mönchengladbach (DE)
(72) Erfinder: Grecksch, Hans, W-4050 Mönchengladbach 5 (DE); Bucken, René, W-4051 Grefrath 1 (DE)
(74) Vertreter: Hamann, Arndt, Dipl.-Ing.

(56) Entgegenhaltungen:
- EP-A- 0 344 507
- DE-A- 3 544 560
- US-A- 3 650 376
- US-A- 3 791 510

## Beschreibung

Die Erfindung betrifft eine Transporteinrichtung nach dem Oberbegriff des ersten Anspruches.

Durch eine Vielzahl von Veröffentlichungen, zum Beispiel die JP-OS 52-25 139 oder die DE-OS 32 35 442, ist es bekannt, Spulen und Spulenhülsen mittels eine Grundplatte und einen Aufsteckdorn aufweisenden, voneinander unabhängigen Einzelträgern zu transportieren. Die Einzelträger werden dabei durch Reibschluß von in Transportrichtung bewegten Oberflächen, wie Transportbändern oder Rollen, mitgenommen. Um dabei die Einhaltung des Transportweges zu sichern, sind beidseits des Transportweges C-förmige Schienen angeordnet, die in der Regel einen Führungsschlitz bilden, in dem die Einzelträger an einem sockelförmigen Aufbau geführt werden, der zwischen Grundplatte und Aufsteckdorn angeordnet ist.

Ein derartiges Transportsystem ist zwar für eine Automatisierung sehr gut geeignet. Allerdings kann durch einen Stau der an sich voneinander unabhängigen Paletten der Transportweg völlig versperrt werden. Das kann innerhalb kurzer Zeit zur Unterversorgung zum Beispiel einer Spulmaschine mit Kopsen oder einer Spinnmaschine mit leeren Hülsen führen. Derartige Staus können durch Verschmutzungen innerhalb der Transportbahn, durch Schleppfäden oder an Einmündungen beim Aufeinandertreffen von Paletten aus verschiedenen Transportbahnen entstehen.

Durch die US-A-3 650 376 ist eine Fördereinrichtung für Kisten bekannt geworden, bei der entlang der Transportstrecke frei drehbare Rollen angeordnet sind, die den Kisten als Auflage dienen. Zwischen diesen Rollen verläuft ein Transportband, welches abgeschrägte Mitnehmer enthält, mit deren Hilfe eine Vorschubbewegung in Transportrichtung auf die Kisten ausgeübt wird. Durch diese Mitnehmer sollen auch Staus von Kisten aufgelöst werden.

Die US-A-3 791 510 stellt eine Weiterentwicklung dieser Transporteinrichtung dar, wobei das Transportband zum Transport der Kisten auch die Unterstützungsrollen mit antreibt. Dadurch erfolgt normalerweise der Transport ausschließlich durch die Rollen, während bei einem Stau durch auch hier auf dem Transportband angeordnete Mitnehmer eine erhöhte Vorschubkraft auf die Kisten ausgeübt wird.

Es ist Aufgabe der Erfindung, das bekannte Transportsystem so weiterzuentwickeln, daß auftretende Staus schnell wieder aufgelöst werden.

Diese Aufgabe wird erfindungsgemäß durch die Merkmale des ersten Anspruches gelöst.

Die kurzzeitige Änderung der Mitnahmekraft der die Paletten transportierenden bewegten Oberfläche überlagert der gleichförmigen Bewegungskomponente in Transporteinrichtung eine impulsartige Bewegungskomponente. Dadurch erhöht sich zum Beispiel kurzzeitig die auf die Paletten wirkende Schubkraft, durch die vorhandene Hemmnisse beseitigt werden.

Dieser Effekt wird gemäß der Erfindung durch eine ungleichförmige Bewegung der Oberfläche, zum Beispiel des Transportbandes, erreicht. Bei einer Mehrzahl von aufgestauten Paletten, die gegebenenfalls durch Bewegungsrichtungsumkehr um einen bestimmten Betrag entgegen der normalen Transportrichtung gefördert wurden, wird dem Hindernis die impulsartige Schubkraft dieser Reihe von Paletten entgegengesetzt.

Die Erfindung ist durch die Merkmale der Ansprüche 2 bis 4 vorteilhaft weitergebildet.

Die Erfindung soll nachfolgend anhand von Ausführungsbeispielen näher erläutert werden. In den zugehörigen Zeichnungen zeigen:
- Fig. 1: eine perspektivische Ansicht eines Transportsystemes mit Paletten und
- Fig. 2: eine vereinfachte Darstellung einer Seitenansicht eines Transportbandes mit einer Steuerung für dessen Antrieb.

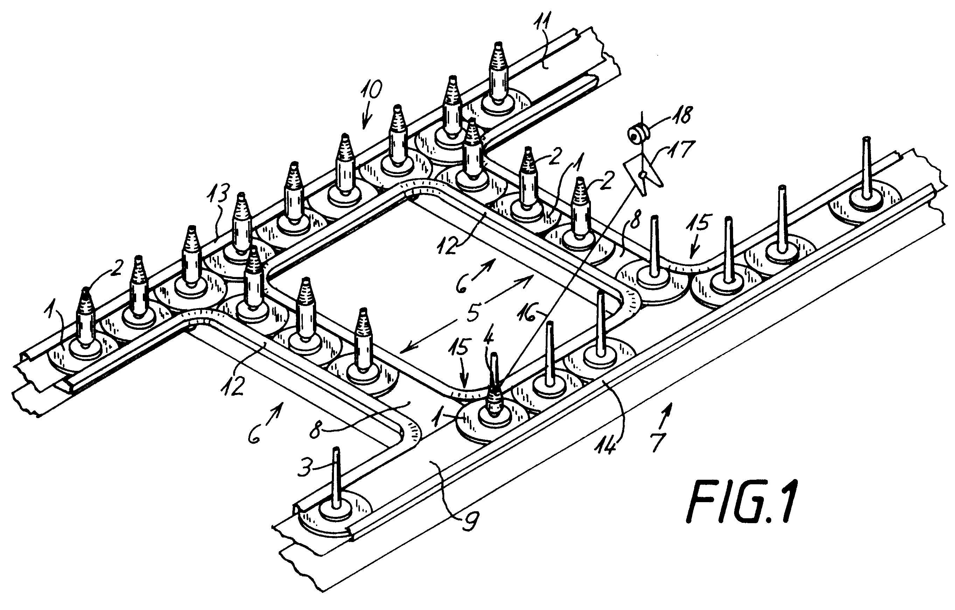

In der Fig. 1 ist ein Ausschnitt eines Transportsystemes für eine automatische Spulmaschine dargestellt. Paletten 1 mit aufgesetzten Kopsen 2 werden entlang einer Verteilerstrecke 10 durch ein reversierendes Transportband 11 an zu den Spulstellen führenden Quertransportbahnen 6 vorbeigeführt. Die Kopse verbleiben während des Abspulens in der Abspulposition 5 auf den Paletten 1. Nach Beendigung des Abspulvorganges werden die Paletten 1 mit den leeren Hülsen 3 beziehungsweise mit Restkopsen 4 von der jeweiligen Spulstelle freigegeben. Durch das in der Quertransportbahn in Richtung auf eine Hülsenrückführbann 7 bewegte Transportband 8 wird dann diese Palette zur Hülsenrückführbahn transportiert und vom Transportband 9 übernommen.

Die Verteilerstrecke 10, die Quertransportbahnen 6 und die Hülsenrückführbahn 7 sind beidseits der jeweiligen Transportbänder durch Führungsschienen 12 bis 14 begrenzt. Diese Führungsschienen dienen dem seitlichen Führen der Paletten 1 in der für sie vorgesehenen Transportrichtung. Bei C-förmiger Ausbildung der Führungsschienen dient gleichzeitig deren Unterseite als Auflage für die Transportbänder und die Oberseite zur Sicherung der Paletten 1 gegen ein Kippen.

Ist von einer Spulstelle eine Palette 1 freigegeben worden, werden die in Wartestellung auf der Quertransportbahn 6 stehenden Paletten 1 ebenfalls in Richtung auf die Hülsenrückführbahn 7 transportiert. Da jedoch die der freigegebenen Palette 1 folgende Palette in der Abspulstellung 5 zurückgehalten wird, erfolgt nur ein Transport um die Breite einer Grundplatte einer Palette 1. Dadurch, daß die Transportbänder 8 der Quertransportbahnen 6 in den Bereich der Verteilerstrecke 10 hineinragen, wird die nächste vorbeikommende Palette 1 vom Transportband 8 erfaßt und in die Quertransportbahn 6 hineingezogen. Diese Palette 1 bildet dann wieder mit ihrer der Verteilerstrecke 10 zugewandten Kante der Grundplatte die Anlage für weitere auf der Verteilerstrecke 10 vorbeitransportierte Paletten 1. Das Transportband 11 kann zum Beispiel mittels einer nicht dargestellten Steuereinrichtung jeweils über vorgegebene Zeitintervalle in einer Transportrichtung bewegt werden, die nach Ablauf des Zeitintervalles wieder umgekehrt wird. Dadurch werden die Paletten 1 ständig an den Quertransportbahnen 6 vorbeigeführt.

Die Fig. 1 zeigt die beiden häufigsten Ursachen für einen Stau. Zum Beispiel erstreckt sich von einem Restkops 4 ein Faden 16 bis zu einem Fadenreiniger 17 beziehungsweise einer Fadenbremse 18. Ein derartiges Verhaken des Fadenendes kann auch an anderen Bauteilen der Spulstelle, am Zuführweg an einer Kopsvorbereitungseinrichtung oder an anderen am Transportweg der Paletten angeordneten Bauteilen erfolgen. Daraus ergibt sich, daß die erfindungsgemäßen Mittel an verschiedensten Stellen eines Transportsystemes vorgesehen werden können.

Ein zweiter Grund für das Bilden eines Staus ist an der Einmündung 15 zu erkennen. Dieser Fall ergibt sich, wenn die Schubkräfte des Quertransportbandes 8 und des Hülsenrückführbandes 9 auf zwei an der Einmündung 15 angekommene Paletten 1 eine Resultierende ergeben, die auf die gekrümmte Kante der Führungsschiene 12 senkrecht gerichtet ist.

Neben den beiden genannten Hauptursachen für die Staubildung ist selbstverständlich auch noch eine Verschmutzung der Transportwege zu nennen. An diesen Stellen kommt es gemäß der Erfindung ebenso zur Änderung der Mitnahmekraft, die auf blockierte Paletten 1 einwirkt. Dadurch kommt es zum Auflösen der Schmutzansammlungen.

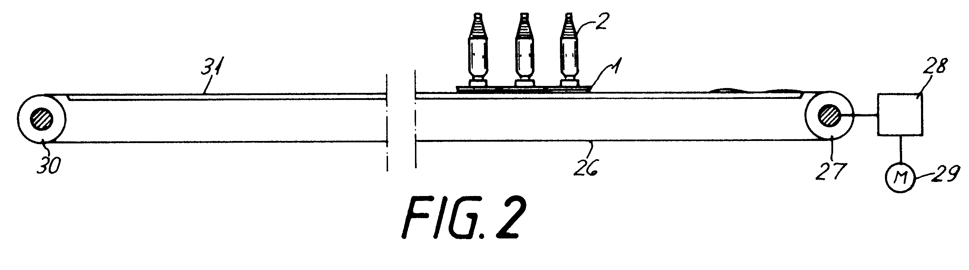

Fig. 2 zeigt eine Seitenansicht zu Fig. 1, wobei ein Transportband 26 über eine Antriebsrolle 27 angetrieben und von einer Umlenkrolle 30 umgelenkt wird. Die Antriebskraft eines Motors 29 wird über eine Steuereinrichtung 28 auf die Antriebsrolle 27 übertragen. Die Steuereinrichtung 28 kann dabei zum Beispiel aus einem Getriebe bestehen, welches eine periodisch einwirkende Bremse besitzt, um auf diese Weise der gleichförmigen Bewegung eine impulsartige Bewegung überlagern zu können. Die Bremse kann aber auch direkt auf den Antriebsmotor 29 einwirken. Darüber hinaus besteht die Möglichkeit, daß die Steuereinrichtung 28 über eine Wechselrichterschaltung den Motor 29 kurzzeitig in der Drehzahl verändert beziehungsweise sogar seine Drehrichtung umkehrt. Ebenso besteht die Möglichkeit, daß die Steuereinrichtung 28 aus einem Getriebe besteht, welches die gleichförmig vom Motor erzeugte Drehbewegung durch entsprechende Kupplungselemente verändert beziehungsweise umkehrt.

In Fig. 2 ist noch eine Unterstützungsfläche 31 für das Transportband 26 dargestellt. Auf die Darstellung von Führungsschienen wurde in dieser vereinfachten Seitenansicht verzichtet.

## Patentansprüche

1. Transporteinrichtung für voneinander unabhängige Paletten (1), die Spulen (2) oder Spulenhülsen (3) tragen und eine Grundplatte aufweisen, mit der sie auf einer sie durch Reibschluß entlang ihres Transportweges mitnehmenden bewegten Oberfläche (9; 26), insbesondere der Oberfläche eines Transportbandes, stehen,
**dadurch gekennzeichnet**,
daß eine Steuereinrichtung (28) für den Antrieb der die Grundplatten der Paletten mitnehmenden Oberfläche (9; 26) vorhanden ist, die zur kurzzeitigen Änderung der Mitnahmekraft der bewegten Oberfläche (9; 26) deren gleichförmiger Bewegung eine impulsartige Bewegung überlagert.

2. Transporteinrichtung nach Anspruch 1, dadurch gekennzeichnet, daß die Steuereinrichtung (28) aus einer periodisch einwirkenden Bremse besteht.

3. Transporteinrichtung nach Anspruch 2, dadurch gekennzeichnet, daß die Bremse auf den Antriebsmotor (29) der die Grundplatten der Paletten mitnehmenden Oberfläche (26) wirkt.

4. Transporteinrichtung nach Anspruch 1, dadurch gekennzeichnet, daß die Steuereinrichtung (28) aus einer Steuerschaltung für den Antriebsmotor (29) der die Grundplatten der Paletten (1) mitnehmenden Oberfläche (26) besteht, durch die die Drehrichtung des Antriebsmotors kurzzeitig umgekehrt wird.

## Claims

1. A transporting device for unconnected pallets (1), which carry bobbins (2) or bobbin holders (3) and have a base plate with which they stand on a surface (9; 26) which carries and moves them by frictional contact along their path of conveyance, specifically the surface of a conveyor belt,
**characterised in that**
a control device (28) is provided for driving the surface (9; 26) carrying the base plates of the pallets, which superimposes an impulse-like movement on its uniform movement to temporarily change the driving power of the moving surface (9; 26).

2. The transporting device according to Claim 1, characterised in that the control device (28) consists of a periodically acting brake.

3. The transporting device according to Claim 2, characterised in that the brake operates on the drive motor (29) of the surface (26) carrying the base plates of the pallets.

4. The transporting device according to Claim 1, characterised in that the control device (28) comprises a control circuit for the drive motor (29) of the surface (26) carrying the base plates of the pallets (1), by means of which the direction of rotation of the drive motor is temporarily reversed.

## Revendications

1. Dispositif transporteur destiné à des supports individuels (1) qui sont indépendants les uns des autres, qui portent des bobines (2) ou des cannettes (3) et qui comportent une plaque de base par laquelle ils reposent verticalement sur une surface mobile (9 ; 26), et en particulier sur la surface d'une bande transporteuse, celle-ci les entraînant par conjugaison par frottement le long de leur trajet de transport, caractérisé par le fait qu'il est prévu un dispositif de commande (28) destiné à produire le déplacement de la surface (9 ; 26) qui entraîne les plaques de base des supports individuels, cependant que ce dispositif, en vue d'une modification de courte durée de la force d'entraînement de la surface mobile (9 ; 26), superpose à son déplacement uniforme un déplacement analogue à une impulsion.

2. Dispositif transporteur selon la revendication 1, caractérisé par le fait que le dispositif de commande (28) est constitué par un frein à action périodique.

3. Dispositif transporteur selon la revendication 2, caractérisé par le fait que le frein agit sur le moteur d'entraînement (29) de la surface (26) qui entraîne les plaques de base des supports individuels.

4. Dispositif transporteur selon la revendication 1, caractérisé par le fait que le dispositif de commande (28) est constitué par un circuit de commande destiné au moteur (29) d'entraînement de la surface (26) qui entraîne les plaques de base des supports individuels (1), circuit au moyen duquel le sens de rotation du moteur d'entraînement est inversé pendant un court instant.
